(19) Europäisches Patentamt

European Patent Office

Office européen des brevets

(11) **EP 0 776 777 B1**

(12) **EUROPÄISCHE PATENTSCHRIFT**

(45) Veröffentlichungstag und Bekanntmachung des Hinweises auf die Patenterteilung:
**13.03.2002  Patentblatt 2002/11**

(51) Int Cl.$^7$: **B60H 1/00**

(21) Anmeldenummer: **96117123.8**

(22) Anmeldetag: **25.10.1996**

(54) **Klimaanlage zur sonneneinstrahlungsabhängigen Klimatisierung eines Fahrzeuginnenraums**

Air conditioning for the interior of a vehicle dependent on solar radiation

Conditionnement d'air pour l'interieur d'un véhicule en fonction du rayonnement solaire

(84) Benannte Vertragsstaaten:
**ES FR GB IT SE**

(30) Priorität: **01.12.1995  DE 19544893**

(43) Veröffentlichungstag der Anmeldung:
**04.06.1997  Patentblatt 1997/23**

(73) Patentinhaber: DaimlerChrysler AG
**70567 Stuttgart (DE)**

(72) Erfinder:
 • **Straub, Wolfgang**
 **73326 Deggingen (DE)**

 • **Wieszt, Herbert**
 **71120 Grafenau (DE)**

(56) Entgegenhaltungen:
DE-A- 3 821 743    DE-A- 4 024 431
DE-A- 4 302 442    DE-A- 4 305 446
US-A- 4 760 772    US-A- 5 186 682

 • **PATENT ABSTRACTS OF JAPAN vol. 017, no. 623 (M-1511), 17.November 1993 & JP 05 193337 A (NIPPONDENSO CO LTD), 3.August 1993,**

 • **PATENT ABSTRACTS OF JAPAN vol. 015, no. 222 (M-1121), 6.Juni 1991 & JP 03 065422 A (ZEXEL CORP;OTHERS: 01), 20.März 1991,**

**Beschreibung**

Die Erfindung bezieht sich auf eine Klimaanlage zur sonneneinstrahlungsabhängigen Klimatisierung eines Fahrzeuginnenraums nach dem Oberbegriff des Anspruchs 1.

Eine derartige Klimaanlage ist in der Offenlegungsschrift DE 40 24 431 A1 beschrieben. Die dortige Klimaanlage beinhaltet eine Sonneneinstrahlungssensorik mit wenigstens zwei Sensorelementen und eine Recheneinrichtung, die aus den Sensorelementausgangssignalen die Intensität und die Richtung der Sonneneinstrahlung berechnet. Das ermittelte Ergebnis wird zur Steuerung eines Luftverteilungsklappenantriebs der Klimaanlage verwendet, um die klimatisierte Luft in einem von der Sonneneinstrahlung abhängigen Verhältnis einerseits der linken und andererseits der rechten Fahrzeuginnenraumseite zuzuführen.

Auch bei einer aus der Offenlegungsschrift DE 43 05 446; A1 bekannten Schaltungsanordnung, die eine Sonneneinstrahlungssensorik mit mehreren Sensorelementen umfaßt, wird zunächst aus den einzelnen Sensorelementausgangssignalen die Intensität und die Richtung der Sonneneinstrahlung ermittelt, wonach diese beiden Größen zur Steuerung einer Klimaanlage sowie weiterer fahrzeugseitiger Aggregate dienen.

In analoger Weise ist bei einer Klimaanlage nach der Patentschrift US 4.760.772 eine Sonneneinstrahlungssensorik vorgesehen, die drei Sensorelemente, von denen eines dem Fahrzeugvorderbereich und die beiden anderen den dahinterliegenden beiden Fahrzeugseitenbereichen zugeordnet sind, oder vier Sensorelemente enthält, von denen eines dem Fahrzeugvorderbereich, eines dem Fahrzeugrückbereich und die beiden anderen den zwei Fahrzeugseitenbereichen zugeordnet sind, wobei in jedem Fall mittels einer nachgeschalteten Rechnereinheit aus den Sensorelementausgangssignalen die Intensität und Richtung der Sonneneinstrahlung ermittelt wird, um mit diesen beiden berechneten Größen die Klimatisierungsleistung der Klimaanlage für verschiedene Fahrzeuginnenraumbereiche unterschiedlich einstellen zu können.

In der US-Patentschrift 5 186 682 wird wie in der US 4.760.772 das Signal zweier seitlicher Sonneneinstrahlungssensoren von einer gemeinsamen Klimatisierungsreglereinheit hinsichtlich Intensität und Einfallsrichtung des Sonnenlichts ausgewertet. Die einzige Klimatisierungsreglereinheit steuert dann die vorhandenen Klimatisierungskanäle in Abhängigkeit von der ermittelten Sonneneinstrahlungsintensität und -richtung an.

Zur Bestimmung von Richtung und Intensität der Sonneneinstrahlung geeignete Sensoreinheiten sind auch in den Offenlegungsschriften DE 38 21 743 A1 und DE 43 02 442 A1 beschrieben.

Der Erfindung liegt als technisches Problem die Bereitstellung einer Klimaanlage zugrunde, bei der mit vergleichsweise geringem Aufwand eine individuelle sonneneinstrahlungsabhängige Klimatisierung verschiedener Bereiche eines Fahrzeuginnenraums möglich ist.

Dieses Problem wird durch eine Klimaanlage mit den Merkmalen des Anspruchs 1 gelöst. Diese Klimaanlage besitzt in ihrer Klimatisierungsleistung steuerbare Klimatisierungskanäle für die verschiedenen Fahrzeuginnenraumbereiche, und jedem Klimatisierungskanal ist ein Sensorelement der Sonneneinstrahlungssensorik zugeordnet, das spezifisch die Sonneneinstrahlung in einem Raumwinkelbereich erfaßt, der in seiner räumlichen Lage mit dem vom betreffenden Klimatisierungskanal klimatisierten Innenraumbereich korrespondiert. Das Ausgangssignal des jeweiligen Sensorelementes wird direkt zur Beeinflussung der Klimatisierungsleistung des zugeordneten Klimatisierungskanals herangezogen Gegenüber den bekannten Systemen, bei denen aus den Sensorele-mentausgangssignalen zunächst die Gesamtintensität und die Richtung der Sonneneinstrahlung ermittelt und erst mit Hilfe dieser beiden ermittelten Größen die Klimaanlagenleistung gesteuert wird, stellt dies eine direktere Klimatisierungssteuerung durch die Sonneneinstrahlungssensorik dar, welche keine Rechnereinheit zur Bestimmung der Gesamtintensität und der Richtung der Sonneneinstrahlung benötigt. Dabei ist für jeden Klimatisierungskanal eine eigene Klimatisierungsreglereinheit vorgesehen, die jeweils vom Ausgangssignal des zugehörigen Sensorelementes unmittelbar oder unter Abzug des Mittelwertes aller Sensorelementausgangssignale angesteuert wird.

Eine nach Anspruch 2 weitergebildete Klimaanlage beinhaltet eine Sonneneinstrahlungssensorik mit vier Sensorelementen, die dem vorderen linken, dem vorderen rechten, dem hinteren linken bzw. dem hinteren rechten Fahrzeugbereich zugeordnet sind. Mit dieser Sensorelementanordung korrespondiert eine vierkanalige Auslegung der Klimaanlage, deren vier einzeln in ihrer Klimatisierungsleistung steuerbare Klimatisierungskanäle den entsprechenden Fahrzeuginnenraumbereichen zugeordnet sind. Jeder dieser vier Innenraumbereiche kann damit individuell entsprechend der in den zugehörigen Raumwinkelquadranten einfallenden, vom betreffenden Sensorelement erfaßten Sonneneinstrahlung klimatisiert werden.

Bei einer nach Anspruch 3 weitergebildeten Klimaanlage steuert jede Klimatisierungsreglereinheit die Klimatisierungsleistung für den zugehörigen Klimatisierungskanal abhängig von der Summe des betreffenden Sonneneinstrahlungs-Sesnsorsignals mit einem Innenraumtemperatur-Sollwertsignal.

Bevorzugte Ausführungsformen der Erfindung sind in den Zeichnungen dargestellt und werden nachfolgend beschrieben. Hierbei zeigen:

Fig. 1    eine schematische Draufsicht auf eine aus vier Sensorelementen bestehende Sonneneinstrahlungssensorik,

Fig. 2    eine Horizontalebenendarstellung der Erfassungsbereiche der einzelnen Sensorelemente von Fig. 1,

Fig. 3    ein schematisches Blockschaltbild einer mit der Sonneneinstrahlungssensorik von Fig. 1 ausgerüsteten 4-Kanal-Klimaanlage und

Fig. 4    ein Blockschaltbild einer zur Klimaanlagensteuerung verwendeten Sonneneinstrahlungssensorik nach Art von Fig. 1.

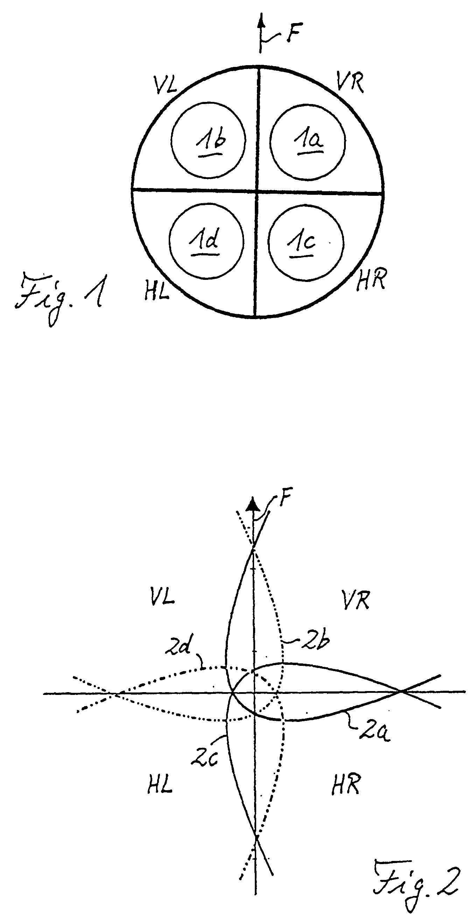

Die in Fig. 1 gezeigte Sonneneinstrahlungssensorik bestehe aus einem in vier Quadranten aufgeteilten Sensor, der in jedem Quadrant ein separates Sensorelement (1a, 1b, 1c, 1d) zur Erfassung der im zugehörigen Raumwinkelbereich einfallenden Sonnenstrahlung aufweist. Der Sensor ist an einem nicht gezeigten Fahrzeug, beispielsweise in dessen Dachbereich, so angeordnet, daß die Sonneneinstrahlung über die gesamte Halbkugel über dem Fahrzeug hinweg detektiert werden kann. Dabei ist der Sensor relativ zum Fahrzeug, dessen Vorwärtsfahrtrichtung in Fig. 1 mit einem Pfeil (F) angedeutet ist, so orientiert, daß der Quadrant eines ersten (1a) der vier Sensorelemente dem vorderen rechten Fahrzeugbereich (VR), der Quadrant eines zweiten Sensorelementes (1b) dem vorderen linken Fahrzeugbereich (VL), der Quadrant eines dritten Sensorelementes (1c) dem hinteren rechten Fahrzeugbereich (HR) und der Quadrant des vierten Sensorelementes (1d) dem hinteren linken Fahrzeugbereich (HL) zugeordnet ist.

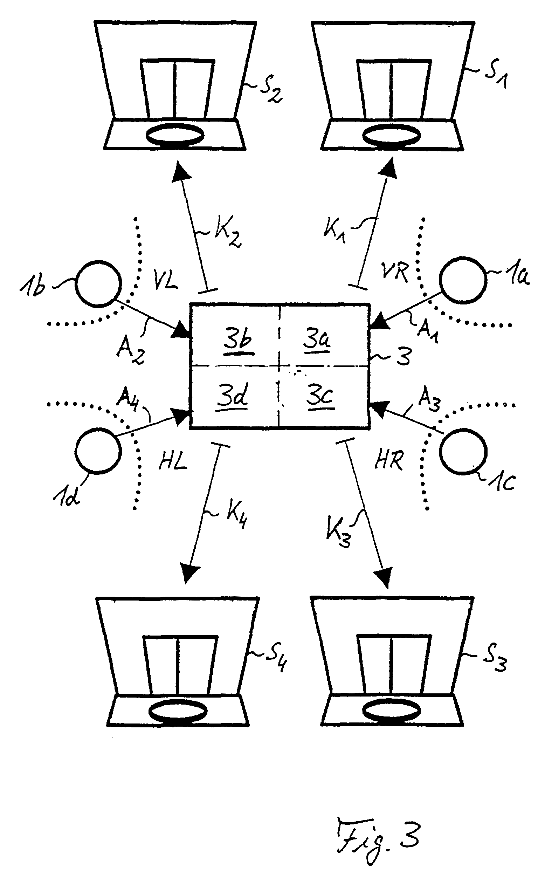

Fig. 2 veranschaulicht die sich aus dieser Anordnung der Sonneneinstrahlungssensorik von Fig. 1 ergebende Zuordnung der einzelnen Sensorelementerfassungsbereiche zu den vier genannten Fahrzeugbereichen, wobei zur Orientierung wiederum die Vorwärtsfahrtrichtung (F) angegeben ist und die Sensorelementerfassungsbereiche in einer Horizontalebenenprojektion der entsprechenden Raumwinkelbereiche dargestellt sind. Eine erste durchgezogene Linie (2a) markiert die Begrenzung des vom ersten Sensorelement (1a) erfaßten Raumwinkelbereichs, das dem vorderen rechten Fahrzeugbereich (VR) zugeordnet ist. Eine erste strichpunktierte Linie (2b) markiert den erfaßten Raumwinkelbereich des zweiten, dem vorderen linken Fahrzeugbereich (VL) zugeordneten Sensorelementes (1b). Analog markiert eine zweite durchgezogene Linie (2c) den vom dritten Sensorelement (1c), das dem hinteren rechten Fahrzeugbereich (HR) zugeordnet ist, erfaßten Raumwinkelbereich, und eine zweite strichpunktierte Linie (2b) markiert den vom vierten Sensorelement (1d) erfaßten Raumwinkelbereich, das dem hinteren linken Fahrzeugbereich (HL) zugeordnet ist. Wie aus Fig. 2 ersichtlich, sind die einzelnen Sensorelemente (1a bis 1d) so angeordnet und ausgelegt, daß die von ihnen erfaßten Raumwinkelbereiche im wesentlichen auf den jeweiligen Fahrzeugbereichquadranten (VR, VL, HR, HL) beschränkt sind und sich nur geringfügig überschneiden.

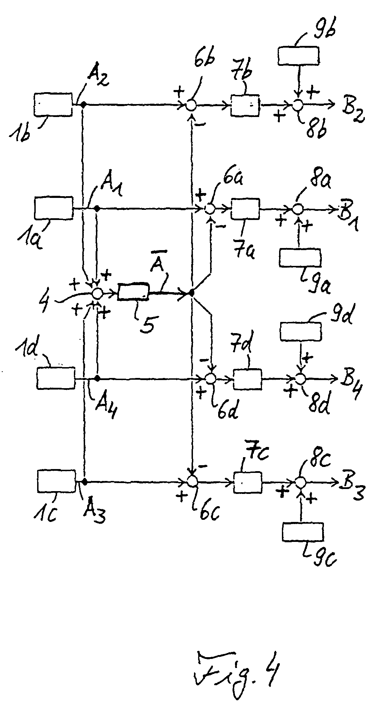

In Fig. 3 ist in Form eines schematischen Blockdiagramms eine Klimaanlage gezeigt, die mit Hilfe der Sonneneinstrahlungssensorik gemäß Fig. 1 und 2 eine sonneneinstrahlungsabhängige Klimatisierung des Fahrzeuginnenraums derart erlaubt, daß einzelne Innenraumbereiche individuell in Abhängigkeit von der Sonneneinstrahlung klimatisiert werden können. Hierzu ist die Klimaanlage vierkanalig ausgelegt, wobei ein erster Klimatisierungskanal dem vorderen rechten Innenraumbereich, d.h. dem Bereich $(S_1)$ eines Beifahrersitzes, ein zweiter Klimatisierungskanal dem vorderen linken Innenraumbereich, d.h. dem Bereich $(S_2)$ eines Fahrersitzes, ein dritter Klimatisierungskanal dem hinteren rechten Innenraumbereich, d.h. dem Bereich $(S_3)$ eines hinteren, rechten Fondsitzes, und ein vierter Klimatisierungskanal dem hinteren linken Innenraumbereich, d.h. dem Bereich $(S_4)$ eines hinteren linken Fondsitzes, zur gezielten, individuellen Klimatisierung des betreffenden Innenraumbereiches zugewiesen sind. Dazu sind in nicht gezeigter, herkömmlicher Weise geeignete Leitungen zur Führung von Klimatisierungsluftströmen $(K_1, K_2, K_3, K_4)$ in die jeweiligen Innenraumbereiche vorgesehen. Des weiteren beinhaltet die 4-Kanal-Klimaanlage einen als 4-Quadranten-Regler ausgelegten Klimatisierungsregler (3) mit vier getrennt ansteuerbaren, funktionsgleichen Reglereinheiten (3a, 3b, 3c, 3d), die jeweils einem der Klimatisierungskanäle zur Regelung von dessen Klimatisierungsleistung zugeordnet sind. Die jeweilige Reglereinheit (3a, 3b, 3c, 3d) regelt dabei den vom zugehörigen Klimatisierungskanal gezielt in den entsprechenden Fahrzeuginnenraumbereich $(S_1$ bis $S_4)$ geleiteten Klimatisierungsluftstrom $(K_1, K_2, K_3, K_4)$ in direkter Abhängigkeit vom Ausgangssignal $(A_1, A_2, A_3, A_4)$ des dem jeweiligen Klimatisierungskanal zugeordneten Sensorelementes (1a, 1b, 1c, 1d) der Sonneneinstrahlungssensorik.

Wie in Fig. 3 durch die punktiert gezeichneten Begrenzungslinien für die einzelnen Sensorelement-Erfassungsbereiche schematisch angedeutet, korrespondiert die Orientierung des vom jeweiligen Sensorelement (1a bis 1d) überwachten Raumwinkelbereichs mit der Lage des Innenraumbereichs, dessen Klimatisierung in Abhängigkeit von dem betreffenden Sensorelement (1a bis 1d) geregelt wird. Dies bedeutet, daß eine erste Reglereinheit (3a) die Klimatisierung des Beifahrersitzbereichs $(S_1)$ in Abhängigkeit vom Ausgangssignal des den vorderen rechten Fahrzeugbereich hinsichtlich Sonneneinstrahlung überwachenden Sensorelementes (1a) steuert bzw. regelt. Analog steuert diejenige Reglereinheit (3b), die das Ausgangssignal $(A_2)$ des dem vorderen linken Fahrzeugbereich (VL) zugeordneten Sensorelementes (1b) empfängt, den Klimatisierungsluftstrom $(K_2)$ für den Fahrersitzbereich $(S_2)$, während eine dritte (3c) und die vierte Reglereinheit (3d) den hinteren rechten $(S_3)$ bzw. den hinteren linken Fondsitzbereich $(S_4)$ in Abhängigkeit vom Ausgangssi-

gnal des hinteren rechten Fahrzeugbereich (HR) bzw. dem hinteren linken Fahrzeugbereich (HL) zugeordneten Sensorelementes (1c bzw. 1d) klimatisieren. Die einzelnen Reglereinheiten (3a bis 3d) des Klimatisierungsreglers (3) können in einem Bauteil integriert oder als getrennte Bauteile mit verbindenden Datenbusleitungen ausgelegt sein. Die Regulierung der Klimatisierungsleistung beeinhaltet jeweils sowohl eine geeignete Einstellung der Temperatur als auch des Durchsatzes der klimatisierenden Luft. Letzteres kann durch entsprechende Einstellung einer zugeordneten Luftklappe und/oder der Leistung eines zugeordneten Gebläses bewerkstelligt werden.

Mit dieser zur Lage der einzeln klimatisierbaren Fahrzeuginnenraumbereiche korrespondierende Wahl der von den Sensorelementen (1a bis 1d) jeweils auf Sonneneinstrahlung überwachten Raumwinkelbereiche läßt sich eine sehr gezielte und damit komfortable Innenraumklimatisierung erzielen. Wenn beispielsweise eine starke Sonneneinstrahlung von vorne rechts auf das Fahrzeug vorliegt, so spricht gezielt das erste Sensorelement (1a) an, wodurch der Klimatisierungsregler (3) über die zugehörige Reglereinheit (3a) gezielt den von der Sonneneinstrahlung primär betroffenen Innenraumbereich in der Umgebung des Beifahrersitzes ($S_1$) mit kühlender Luft versorgt. Wenn, um ein weiteres Beispiel zu nennen, eine starke Sonneneinstrahlung von der linken Fahrzeugseite her vorliegt, sprechen gezielt die beiden linksseitigen Sensorelemente (1b, 1d) an, wodurch die zu den beiden linksseitigen Klimatisierungskanälen gehörigen Reglereinheiten (3b, 3d) das Ausblasen kühlender Luft in die Bereiche des Fahrersitzes ($S_2$) und des linken Fondsitzes ($S_4$) veranlassen. Ersichtlich erfolgt die gezielte Klimatisierung bestimmter Innenraumbereiche bei dieser Klimaanlage ohne den Umweg einer vorherigen Ermittlung der Gesamtintensität und der Richtung der Sonneneinstrahlung in einer dazu vorzusehenden Rechnereinheit in einfacher Weise dadurch, daß direkt das Ausgangssignal desjenigen Sensorelementes, das den mit dem betreffenden Innenraumbereich korrespondierenden Einstrahlungs-Raumwinkelbereich überwacht, zur Einstellung der Klimatisierungsleistung herangezogen wird.

Anstelle einer ausschließlichen Nutzung jedes einzelnen Sensorelementausgangssignals ($A_1$ bis $A_4$) nur für die Einstellung der Klimatisierungsleistung im entsprechenden Klimatisierungskanal kann alternativ vorgesehen sein, die vier Sensorelementausgangssignale ($A_1$ bis $A_4$) zu einer Mittelwertbildung zu verknüpfen und zur Einstellung der Klimatisierungsleistung im betreffenden Klimatisierungskanal direkt das Ausgangssignal des dem jeweiligen Klimatisierungskanal zugeordneten Sensorelementes abzüglich dieses berechnetes Mittelwertes zu verwenden. Eine hierfür geeignete schaltungstechnische Auslegung der Sonneneinstrahlungssensorik mit den entsprechend der Figuren 1 und 2 angeordneten vier Sensorelementen (1a, 1b, 1c, 1d) ist als Blockschaltbild in Fig. 4 dargestellt.

Bei dieser schaltungstechnischen Auslegung wird über einen Addierer (4) und einen Multiplizierer (5), der das Eingangssignal mit dem Faktor 0,25 multipliziert, aus den vier Sensorelementausgangssignalen ($A_1$, $A_2$, $A_3$, $A_4$) der arithmetische Mittelwert ($\bar{A}$) ermittelt. Dieser Mittelwert ($\bar{A}$) wird über einen jeweiligen Subtrahierer (6a, 6b, 6c, 6d) von jedem der einzelnen Sensorelementausgangssignale ($A_1$ bis $A_4$) subtrahiert. Die solchermaßen mittelwertbereinigten Sensorelementausgangssignale werden dann optimal in einem jeweiligen Multiplizierer (7a, 7b, 7c, 7d) mit einem geeigneten Faktor multipliziert, der linear von der Gesamtintensität der einfallenden Sonnenstrahlung abhängig gewählt sein kann. Wenn diese optionale Multiplikation angewendet wird, kann hierfür beispielsweise das Ausgangssignal des Addierers (4) als Maß für die gesamte Sonneneinstrahlungsintensität herangezogen werden. An die Multiplizierer (7a bis 7d) schließt sich dann jeweils ein Addierer (8a, 8b, 8c, 8d) an, der zum Ausgangssignal des betreffenden Multiplizierers (7a bis 7d) das Ausgangssignal eines jeweiligen Temperaturstellgliedes (9a, 9b, 9c, 9d) addiert, um daraus das jeweilige Ausgangssignal ($B_1$, $B_2$, $B_3$, $B_4$) zur Einstellung der Klimatisierungsleistung im zugehörigen Fahrzeuginnenraumbereich zu liefern. Dabei wird an den Temperaturstellgliedern (9a bis 9d) vom Benutzer die für den jeweiligen Innenraumbereich von ihm an sich, d.h. ohne Sonneneinstrahlungsbeeinflussung, gewünschte Temperatur vorgegeben.

**Patentansprüche**

1.   Klimaanlage zur sonneneinstrahlungsabhängigen Klimatisierung eines Fahrzeuginnenraums mit

-   mindestens zwei Klimatisierungskanälen (3a, $K_1$; 3b, $K_2$; 3c, $K_3$; 3d, $K_4$) zur Klimatisierung unterschiedlicher Fahrzeuginnenraumbereiche ($S_1$, $S_2$, $S_3$, $S_4$) und
-   einer Sonneneinstrahlungssensorik mit mehreren Sensorelementen (1a, 1b, 1c, 1d) zur Erfassung der Sonneneinstrahlung in unterschiedlichen Raumwinkelbereichen,

**dadurch gekennzeichnet, daß**

-   jedem Klimatisierungskanal ein eigenes Sensorelement der Sonneneinstrahlungssensorik und eine eigene Klimatisierungsreglereinheit (3a, 3b, 3c, 3d) individuell zugeordnet ist, wobei jede Klimatisierungsreglereinheit die Klimatisierungsleistung des betreffenden Klimatisierungskanals in Abhängigkeit vom Ausgangssignal eines zugeordneten Sensorelementes der Sonneneinstrahlungssensorik einstellt, das die Sonneneinstrahlung im wesentlichen beschränkt auf denjenigen Raumwinkelbereich (VR,VL,HR,HL) erfaßt, welcher lagemäßig mit den vom betreffenden Klimatisierungskanal klimatisierten Fahrzeuginnenraumbereich korrespondiert.

2. Klimaanlage nach Anspruch 1, weiter **dadurch gekennzeichnet, daß** sie vier Klimatisierungskanäle zur Klimatisierung eines Beifahrersitzes ($S_1$), eines Fahrersitzbereiches ($S_2$), eines rechten Fondsitzbereichs ($S_3$) bzw. eines linken Fondsitzbereichs ($S_4$) beinhaltet und die Sonneneinstrahlungssensorik vier Sensorelemente (1a, 1b, 1c, 1d) zur Erfassung der Sonneneinstrahlung im vorderen rechten (VR), vorderen linken (VL), hinteren rechten (HR) bzw. hinteren linken Fahrzeugbereich (HL) aufweist.

3. Klimaanlage nach Anspruch 1 oder 2, weiter **dadurch gekennzeichnet, daß** jeder Klimatisierungskanal eine eigene Klimatisierungsreglereinheit (3a, 3b, 3c, 3d) beinhaltet, welche die Klimatisierungsleistung für den zugehörigen Klimatisierungskanal in Abhängigkeit von der Summe aus einem von einem benutzereinstellbaren Temperaturstellglied (9a, 9b, 9c, 9d) abgegebenen Ausgangssignal und entweder unmittelbar dem Ausgangssignal ($A_1$, $A_2$, $A_3$, $A_4$) oder einem mittelbereinigten Ausgangssignal des zugeordneten Sensorelementes ($S_1$, $S_2$, $S_3$, $S_4$) einstellt.

4. Klimaanlage nach einem der Ansprüche 1 bis 3, **dadurch gekennzeichnet, daß** das jeweilige Sensorelement-Ausgangssignal, in dessen Abhängigkeit die Klimatisierungsleistung des zugehörigen Klimatisierungskanals durch die zugeordnete Klimatisierungsreglereinheit eingestellt wird, auf einen Mittelwert der Ausgangssignale aller Sensorelemente bezogen ist.

**Claims**

1. Air conditioning installation for sun irradiation dependent air conditioning of a vehicle inner area with

   - at least two air conditioning channels (3a, $K_1$; 3b, $K_2$; 3c, $K_3$; 3d, $K_4$) for the air conditioning of different vehicle inner areas ($S_1$, $S_2$, $S_3$, $S_4$) and
   - a sun irradiation sensing means with several sensor elements (1a, 1b, 1c, 1d) for recording the sun irradiation in different solid angle areas,

   **characterised in that**
   an individual sensor element of the sun irradiation sensing means and an individual air conditioning regulating unit (3a, 3b, 3c, 3d) are assigned to each air conditioning channel wherein each air conditioning regulating unit adjusts the air conditioning output of the air conditioning channel in question depending upon the output signal of an associated sensor element of the sun irradiation sensing means which records the sun irradiation essentially limited to the solid angle area (VR, VL, HR, HL) which with regard to its location corresponds to the vehicle inner area air conditioned by the air conditioning channel in question.

2. Air conditioning installation according to claim 1 further **characterised in that** it contains four air conditioning channels for the air conditioning of a passenger seat ($S_1$), a driver's seat area ($S_2$), a right back seat area ($S_3$) and a left back seat area ($S_4$) and the sun irradiation sensing means has four sensor elements (1a, 1b, 1c, 1d) for recording the sun irradiation in the front right (VR), front left (VL), back right (HR) and back left (HL) vehicle area.

3. Air conditioning installation according to claim 1 or 2 further **characterised in that** each air conditioning channel contains its own air conditioning regulating unit (3a, 3b, 3c, 3d) which adjusts the air conditioning output for the associated air conditioning channel depending upon the sum of an output signal emitted by a user-adjustable temperature setting member (9a, 9b, 9c, 9d) and either directly the output signal ($A_1$, $A_2$, $A_3$, $A_4$) or a medium-removed output signal of the assigned sensor element ($S_1$, $S_2$, $S_3$, $S_4$).

4. Air conditioning installation according to one of the claims 1 to 3
   **characterised in that**
   the respective sensor element output signal depending upon which the air conditioning output of the associated air conditioning channel is adjusted through the assigned air conditioning regulating unit relates to a mean value of the output signals of all sensor elements.

**Revendications**

1. Système de conditionnement d'air pour la climatisation de l'habitacle d'un véhicule en fonction du rayonnement solaire, comprenant :

   - au moins deux canaux de climatisation (3a, $K_1$ ; 3b, $K_2$ ; 3c, $K_3$ ; 3d, $K_4$) pour la climatisation des différentes parties de l'habitacle d'un véhicule ($S_1$, $S_2$, $S_3$, $S_4$) et
   - un ensemble de capteurs de rayonnement solaire se composant de plusieurs éléments capteurs (1a, 1b, 1c, 1d) pour capter le rayonnement solaire dans différentes zones angulaires,

caractérisé

- on ce qu'un propre élément capteur de l'ensemble des capteurs de rayonnement solaire et une propre unité de régulation de climatisation (3a, 3b, 3c, 3d) sont associés individuellement à chaque canal de climatisation, où chaque unité de régulation de climatisation régule la puissance de climatisation du canal de climatisation concerné, en fonction du signal de sortie d'un élément capteur associé de l'ensemble des capteurs de rayonnement solaire, lequel élément capteur capte le rayonnement solaire limité essentiellement à la zone angulaire (VR, VL, HR, HL) qui correspond, concernant son emplacement, à la zone de l'habitacle du véhicule climatisée par le canal de climatisation concerné.

2. Système de conditionnement d'air selon la revendication 1, **caractérisé en outre en ce que** le système de conditionnement d'air comprend quatre canaux de climatisation servant à la climatisation d'un siège de passager avant ($S_1$), d'une zone de siège de conducteur ($S_2$), d'une zone de siège arrière droit ($S_3$) ou d'une zone de siège arrière gauche ($S_4$), et **en ce que** l'ensemble des capteurs de rayonnement solaire comprend quatre éléments capteurs (1a, 1b, 1c, 1d) servant à capter le rayonnement solaire dans la zone avant droite (VR), dans la zone avant gauche (VL), dans la zone arrière droite (HR) ou dans la zone arrière gauche (HL) du véhicule.

3. Système de conditionnement d'air selon la revendication 1 ou 2, **caractérisé en outre en ce que** chaque canal de climatisation contient une propre unité de régulation de climatisation (3a, 3b, 3c, 3d) qui régule la puissance de climatisation pour le canal de climatisation correspondant, en fonction de la somme d'un signal de sortie fourni par un élément de réglage de la température (9a, 9b, 9c, 9d) réglable par l'utilisateur, et soit directement du signal de sortie ($A_1$, $A_2$, $A_3$, $A_4$), soit d'un signal de sortie, corrigé par des valeurs moyennes, de l'élément du capteur associé ($S_1$, $S_2$, $S_3$, $S_4$).

4. Système de conditionnement d'air selon l'une quelconque des revendications 1 à 3, **caractérisé en ce que** le signal de sortie respectif de l'élément capteur, en fonction duquel la puissance de climatisation du canal de climatisation correspondant est réglée par l'unité de régulation de climatisation associée, est établi sur la base d'une valeur moyenne des signaux de sortie de tous les éléments des capteurs.

Fig. 1

Fig. 2

$Fig. 3$

Fig. 4